Europäisches Patentamt

European Patent Office

Office européen des brevets

(19)

(11) Numéro de publication : **0 438 366 A1**

# (12) DEMANDE DE BREVET EUROPEEN

(21) Numéro de dépôt : **91440002.3**

(22) Date de dépôt : **16.01.91**

(51) Int. Cl.⁵ : **H05B 6/42**

(30) Priorité : 16.01.90 FR 9000586

(43) Date de publication de la demande :
24.07.91 Bulletin 91/30

(84) Etats contractants désignés :
AT BE CH DE DK ES FR GB GR IT LI LU NL SE

(71) Demandeur : **ATELIERS DE CONSTRUCTIONS
ELECTRIQUES DU SUNDGAU SARL**
11, rue de lEglise
F-68210 Brechaumont (FR)

(72) Inventeur : **Allemann, Christian**
11 rue de l'Eglise
F-68210 Brechaumont (FR)

(74) Mandataire : **Nithardt, Roland
CABINET NITHARDT & BURKARD 12 rue du 17
Novembre Boite Postale 1445
F-68071 Mulhouse Cédex (FR)**

(54) **Inducteur pour un four à induction, comportant un tube parcouru par un liquide de refroidissement.**

(57)    L'invention concerne un inducteur pour un four à induction, perfectionné de manière à éviter des problèmes d'isolation notamment des problèmes de sécurité électrique et de corrosion dus au liquide de refroidissement.
    L'inducteur comporte une bobine extérieure composée d'un ensemble de spires formées par un tube (1) parcouru par un circuit de liquide de refroidissement. Le tube (1) contient aussi un ou plusieurs conducteurs électriques (6) revêtus d'une gaine isolante. Chaque extrémité du tube (1) est raccordée, par l'intermédiaire d'un manchon isolant (13) et d'un élément tubulaire (11), à un connecteur électrique (15) et à un raccord (9) d'entrée ou de sortie de liquide.
    Application aux fours à induction.

FIG.2

EP 0 438 366 A1

# INDUCTEUR POUR UN FOUR A INDUCTION, COMPORTANT UN TUBE PARCOURU PAR UN LIQUIDE DE REFROIDISSEMENT

La présente invention concerne un inducteur pour un four à induction comportant au moins une bobine composée d'un ensemble de spires formées par un tube parcouru par un liquide de refroidissement sous pression , chaque extrémité du tube étant raccordée à une tête pourvue d'un organe de connexion électrique et d'un raccord d'entrée ou de sortie du liquide de refroidissement.

Les inducteurs habituels de ce genre sont formés par un tube de cuivre servant à la fois de conducteur électrique et de conduit pour un circuit de liquide de refroidissement sous pression, évacuant la chaleur due à la résistance ohmique du cuivre. Cette construction connue pose différents problèmes d'isolation de l'inducteur vis-à-vis de l'extérieur, en particulier à cause de la température élevée atteinte par la surface extérieure du conducteur refroidi essentiellement de l'intérieur par le liquide. Il y a aussi des problèmes de corrosion à chaud à l'intérieur et/ou à l'extérieur du tube de cuivre. L'isolation aux extrémités, dans la zone des raccords du circuit de refroidissement, exige aussi des dispositions constructives contraignantes.

La présente invention vise à éviter les inconvénients sus-mentionnés de l'état de la technique, en améliorant en particulier la sécurité grâce à une isolation du ou des conducteurs vis-à-vis de l'extérieur.

Dans ce but, l'invention concerne un inducteur du type indiqué en préambule, caractérisé en ce qu'il comporte au moins un conducteur électrique disposé à l'intérieur du tube parcouru par le liquide de refroidissement, ce conducteur étant raccordé à l'organe de connexion électrique dans chacune desdites têtes, et en ce que ledit conducteur est isolé électriquement par rapport au tube.

Ainsi, le tube extérieur formant le conduit du liquide de refroidissement peut être un potentiel zéro et peut notamment être raccordé électriquement à la terre.

De préférence, le conducteur est pourvu d'une gaine isolante sur toute la longueur du tube.

Dans une forme de réalisation préférée, l'inducteur comporte plusieurs conducteurs logés dans le tube et raccordés dans chaque tête à un organe de connexion commun. Ces conducteurs peuvent être des conducteurs monobrins isolés.

Dans une forme de réalisation particulière, au moins l'une des têtes comporte un manchon isolant interposé entre ledit tube et l'organe de connexion, de façon à les raccorder mécaniquement tout en interrompant la liaison galvanique entre eux. Ladite tête peut comporter un élément tubulaire monté entre le manchon isolant et l'organe de connexion et pourvu du raccord d'entrée ou de sortie de liquide à proximité de l'organe de connexion. Dans une autre exécution, le manchon isolant peut être pourvu du raccord d'entrée ou de sortie de liquide.

La présente invention et ses avantages apparaîtront mieux dans la description suivante de différents exemples de réalisation, en référence aux dessins annexés, dans lesquels :

La figure 1 est une vue en élévation frontale d'une forme de réalisation d'un inducteur selon l'invention,

la figure 2 est une vue de détail en coupe longitudinale d'une extrémité de cet inducteur,

la figure 3 est une vue schématique en coupe transversale suivant la ligne III-III de la figure 2 et,

la figure 4 est une vue analogue à la figure 2, montrant une autre forme de réalisation.

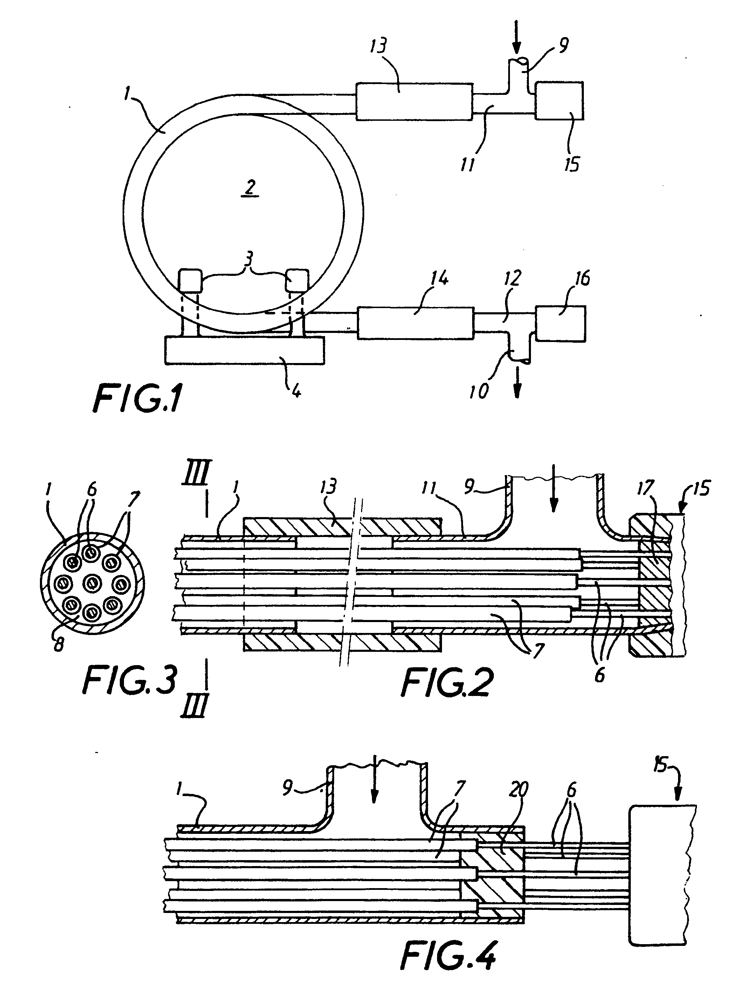

En référence aux figures 1 à 3, l'inducteur représenté comporte un tube métallique extérieur 1, enroulé sous la forme de spires circulaires pour former une bobine cylindrique autour d'un passage longitudinal 2 dans lequel on fait circuler, sur des rails 3 portés par un support 4, des pièces métalliques à chauffer par induction. Le tube 1 peut être, par exemple, en acier inoxydable ou en alliage léger ; il peut reposer également sur le support 4 et être raccordé électriquement à la terre, de sorte qu'aucune isolation ou protection du tube vis-à-vis de l'extérieur ne soit nécessaire.

Comme on le voit particulièrement aux figures 2 et 3, le tube 1 contient une série de fils conducteurs 6 ayant chacun une gaine isolante 7, noyés dans de l'eau de refroidissement 8 circulant longitudinalement dans le tube 1, d'un raccord d'entrée 9 à un raccord de sortie 10. Chaque raccord 9, 10 fait partie d'un élément tubulaire métallique 11, 12 qui est raccordé à l'extrémité correspondante du tube 1 par un manchon isolant 13, 14. Du côté opposé à ce manchon, l'élément 11, 12 est équipé d'un connecteur électrique 15, 16 dans lequel les fils conducteurs 6 sont dénudés et sont sertis dans un bloc métallique 17 raccordé électriquement à un organe de connexion classique, non représenté.

Avec cette construction, les éléments tubulaires 11, 12 ne sont pas isolés par rapport au conducteur 6. En revanche le tube 1 est isolé par rapport à eux par les manchons 13 et 14 assurant une rupture de la liaison galvanique entre les deux extrémités de l'inducteur. Comme la tension électrique est généralement assez basse, les fuites de courant à travers l'eau de refroidissement sont réduites. On peut d'ailleurs donner une longueur relativement importante aux manchons 13 et 14 afin de réduire ces fuites.

L'eau de refroidissement 8 entourant complètement les fils conducteurs 6 a l'avantage de refroidir en même temps les conducteurs et leur gaine isolante 7, ainsi que le tube 1 exposé au rayonnement thermique des pièces chauffées. De ce fait, il est possible d'utiliser des conducteurs gainés de type courant, en particulier des fils monobrins isolés. A la place de ces fils, on peut aussi utiliser un ou plusieurs câbles multibrins à torons, pourvus d'une gaine isolante en matière synthétique ou autre.

Dans une variante qui n'est pas représentée, les raccords d'entrée 9 et de sortie 10 du liquide pourraient être prévus sur les manchons isolants 13 et 14, de façon à ne pas être en contact électrique avec le connecteur correspondant.

La figure 4 représente schématiquement une autre forme de réalisation possible, dans laquelle le raccord d'entrée 9 est disposé latéralement sur une extrémité du tube 1, cette extrémité étant obturée de manière étanche par un bouchon 20 traversé par les fils gainés 6. Les fils ne sont dénudés qu'à l'extérieur de ce bouchon, pour leur raccordement à l'organe de connexion 15. Ainsi, les conducteurs sont complètement isolés électriquement par rapport au circuit de refroidissement. Par contre cette réalisation ne permet pas un refroidissement du connecteur comme dans l'exemple précédent.

La présente invention n'est pas limitée aux exemples de réalisation décrits ci-dessus, mais elle s'étend à toute modification ou variante évidente pour un homme du métier. A part l'augmentation considérable de la sécurité électrique dans un four à induction, elle a l'avantage de résoudre les problèmes de corrosion des conducteurs grâce à la possibilité d'éviter tout contact entre eux et le liquide de refroidissement. Le cas échéant, le tube extérieur 1 peut aussi être pourvu d'un revêtement intérieur évitant son contact avec le liquide. Un autre avantage important est la possibilité d'utiliser des conducteurs du commerce, beaucoup moins coûteux que les tubes de cuivre utilisés jusqu'ici. Enfin, le tube extérieur sert essentiellement de support et de conduit étanche et il peut être réalisé en n'importe quelle matière, métallique ou non, appropriée à cette fonction.

## Revendications

1. Inducteur pour un four à induction, comportant au moins une bobine composée d'un ensemble de spires formées par un tube parcouru par un liquide de refroidissement sous pression, chaque extrémité du tube étant raccordée à une tête pourvue d'un organe de connexion électrique et d'un raccord d'entrée ou de sortie de liquide de refroidissement caractérisé en ce qu'il comporte au moins un conducteur électrique (6) disposé à l'intérieur du tube (1) parcouru par le liquide de refroidissement (8) ce conducteur étant raccordé à l'organe de connexion électrique (15, 16) dans chacune desdites têtes, et en ce que ledit conducteur (6) est isolé électriquement par rapport au tube (1).

2. Inducteur pour un four à induction selon la revendication 1, caractérisé en ce que le tube (1) est raccordé électriquement à la terre.

3. Inducteur pour un four à induction selon la revendication 1, caractérisé en ce que le conducteur (6) est pourvu d'une gaine isolante (7) sur toute la longueur du tube.

4. Inducteur pour un four à induction selon la revendication 1, caractérisé en ce qu'il comporte plusieurs conducteurs (6) logés dans le tube (1) et raccordés dans chaque tête à un organe de connexion commun (15, 16).

5. Inducteur pour un four à induction selon la revendication 4, caractérisé en ce que les conducteurs (6) sont des fils conducteurs monobrins isolés.

6. Inducteur pour un four à induction selon la revendication 1, caractérisé en ce qu'au moins l'une des têtes comporte un manchon isolant (13, 14) interposé entre ledit tube (1) et l'organe de connexion (15, 16) de façon à les raccorder mécaniquement tout en interrompant la liaison galvanique entre eux.

7. Inducteur pour un four à induction selon la revendication 6, caractérisé en ce que ladite tête comporte un élément tubulaire (11, 12) monté entre le manchon isolant et l'organe de connexion et pourvu du raccord d'entrée (9) ou de sortie (10) de liquide à proximité de l'organe de connexion.

8. Inducteur pour un four à induction selon la revendication 6, caractérisé en ce que le manchon isolant est pourvu du raccord d'entrée ou de sortie de liquide.

FIG.1

FIG.3

FIG.2

FIG.4

Office européen
des brevets

**RAPPORT DE RECHERCHE EUROPEENNE**

Numero de la demande

EP    91 44 0002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1390138 (DEUTSCHE EDELSTAHLWERKE AG) <br> * page 1, colonne de gauche, ligne 36 - page 2, colonne de gauche, ligne 8 * <br> * page 2, colonne de gauche, lignes 30 - 40; figure 2 * | 1, 3-5 | H05B6/42 |
| X | EP-A-170556 (ELECTRICITE DE FRANCE) <br> * page 4, lignes 6 - 25 * <br> * page 5, ligne 31 - page 6, ligne 12; figure * | 1 | |
| A | | 6-8 | |
| A | US-A-2574855 (J.D. WILLIAMS) | | |
| A | US-A-3860737 (C.L. MOSCATELLO) | | |

**DOMAINES TECHNIQUES RECHERCHES (Int. Cl.5)**

H05B

Le présent rapport a été établi pour toutes les revendications

| Lieu de la recherche | Date d'achèvement de la recherche | Examinateur |
|---|---|---|
| LA HAYE | 25 AVRIL 1991 | ALBERTSSON E.G. |